# EUROPEAN PATENT APPLICATION

(11) **EP 1 995 485 A1**
(43) Date of publication of application: **26.11.2008**
(21) Application number: 07252108.1
(22) Date of filing: 23.05.2007
(51) Int. Cl.: F16D 41/06, F16D 41/10, F16H 48/16

(54) **Simple structural speed differential mechanism**

(71) Applicant: Liu, Jen-Chih, Kaohsiung City (TW)
(72) Inventor: Liu, Jen-Chih, Kaohsiung City (TW)
(74) Representative: Brown, Kenneth Richard

(57) **Abstract**

A simple structural speed differential mechanism installed between a driving shaft and two driven shafts comprises a transfer shaft with a polygonal outer shape; a middle section of the transfer shaft being a gear which is engaged to the driving shaft; two roller frames installed at two ends of the transfer shaft; each roller frame being installed with a plurality of penetrating openings; the number of the penetrating openings being equal to that of the side surfaces of the transfer shaft; each penetrating opening receiving a rolling post; and two shaft connecting units; an outer side of each roller frame being installed with a shaft connecting device; one end of each shaft connecting unit being installed to an outer side of the roller frame; and another end of the shaft connecting unit serving for assembling the driven shafts.

## Description

### FIELD OF THE INVENTION

The present invention relates to speed differential mechanisms, and particularly to a simple structural speed differential mechanism, which can move forwards and backwards.

### Background of the invention

In the prior art, such as USP3,300,002, USP3,414,096, USP3,476,226, USP3,788,435, USP5,025,902, USP5,036,939, USP6622837B2 and USP6,769,506B2, etc., rolling posts are used in clutches or in axial power transfer mechanisms.

The speed difference mechanism between the driving shaft and two driven shafts of vehicles do not use the technologies disclosed by above mentioned prior arts. In USP6622837, it presents the effect of speed difference. In the designs, the rolling posts are installed at the same roller frame and the driven shafts at two sides are inserted into the roller frame from two ends of the roller frame. Therefore, the structure is complicated and it is bulged and heavy. Moreover, because only one roller frame is used to install the rolling posts at two sides which will interact with one another. As the rolling posts at one side is destroyed, the whole roller frame must be updated. This will increase the cost in repair and the un-destroyed rolling posts are deserted so as to induce the waste in cost and time.

### SUMMARY OF THE INVENTION

Accordingly, the primary object of the present invention is to provide a simple structural speed differential mechanism installed between a driving shaft and two driven shafts comprising a transfer shaft with a polygonal outer shape; a middle section of the transfer shaft being a gear which is engaged to the driving shaft; two roller frames installed at two ends of the transfer shaft; each roller frame being installed with a plurality of penetrating openings; the number of the penetrating openings being equal to that of the side surfaces of the transfer shaft; each penetrating opening receiving a rolling post; and two shaft connecting units; an outer side of each roller frame being installed with a shaft connecting device; one end of each shaft connecting unit being installed to an outer side of the roller frame; another end of the shaft connecting unit serving for assembling the driven shafts. When the driving shaft drives the two driven shafts move, the rolling posts will move independently without rotating with the two shaft connecting units synchronously so that each rolling post is in ON state so as to move; as in turning, when the rotation speed of the shaft connecting unit is quick than the rotation speed of the transfer shaft, the rolling posts will leave from the ON speed due to the speed difference between the shaft connecting unit and the rolling post; the rolling post is on an off state; and then the shaft connecting unit will have the effect of speed reduction in turning.

The various objects and advantages of the present invention will be more readily understood from the following detailed description when read in conjunction with the appended drawing.

### BRIEF DESCRIPTION OF THE DRAWINGS

Fig. 1 shows the embodiment of the simple structural speed differential mechanism of the present invention.

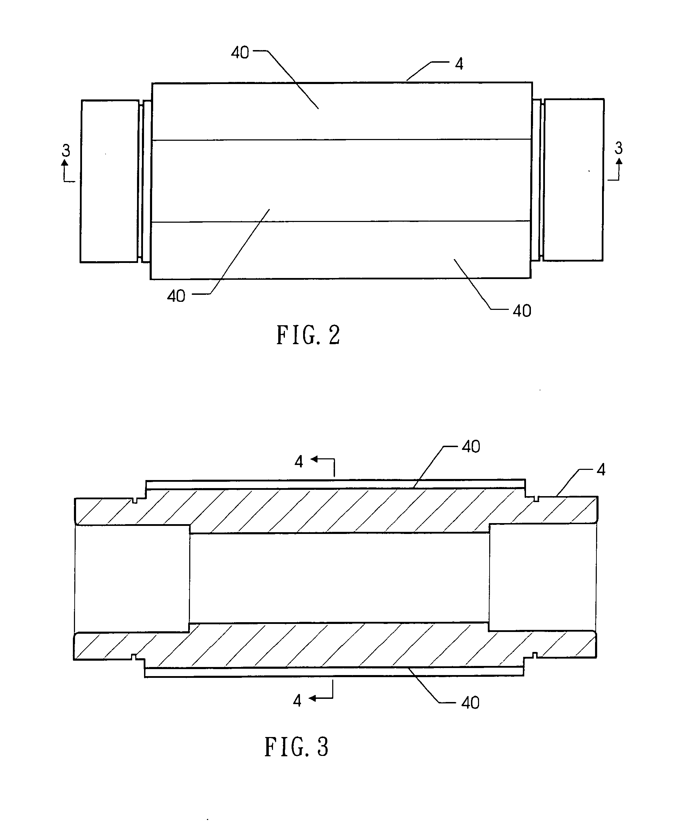

Fig. 2 shows the transfer shaft of the present invention.
Fig. 3 is a cross sectional view showing line 3-3 of Fig. 2.
Fig. 4 is a cross sectional view along line 4-4 of Fig. 2.
Fig. 5 is a right side view of Fig. 2.
Fig. 6 shows the embodiment about the roller frame and the rolling posts of the present invention.
Fig. 7 is a cross sectional view along line 7-7 of Fig. 6.
Fig. 8 is a cross sectional view along line 7-7 of Fig. 6.
Fig. 9 shows the returning operation of the present invention.
Fig. 10 is a schematic view showing the assembly of the transfer shaft, roller frame and the rolling posts of the present invention.
Fig. 11 is a schematic view showing that the structure in Fig. 10 rotates counterclockwise.
Fig. 12 is a schematic view showing that the structure in Fig. 10 rotates clockwise.
Fig. 13 is a schematic view showing the assembly of the roller frame, rolling posts and the shaft connecting unit according to the present invention.
Fig. 14 is a schematic view showing that the structure in Fig. 13 rotates counterclockwise.
Fig. 15 is a schematic view showing that the structure in Fig. 13 rotates clockwise.

### DETAILED DESCRIPTION OF THE INVENTION

In order that those skilled in the art can further understand the present invention, a description will be provided in the following in details. However, these descriptions and the appended drawings are only used to cause those skilled in the art to understand the objects, features, and characteristics of the present invention, but not to be used to confine the scope and spirit of the present invention defined in the appended claims.

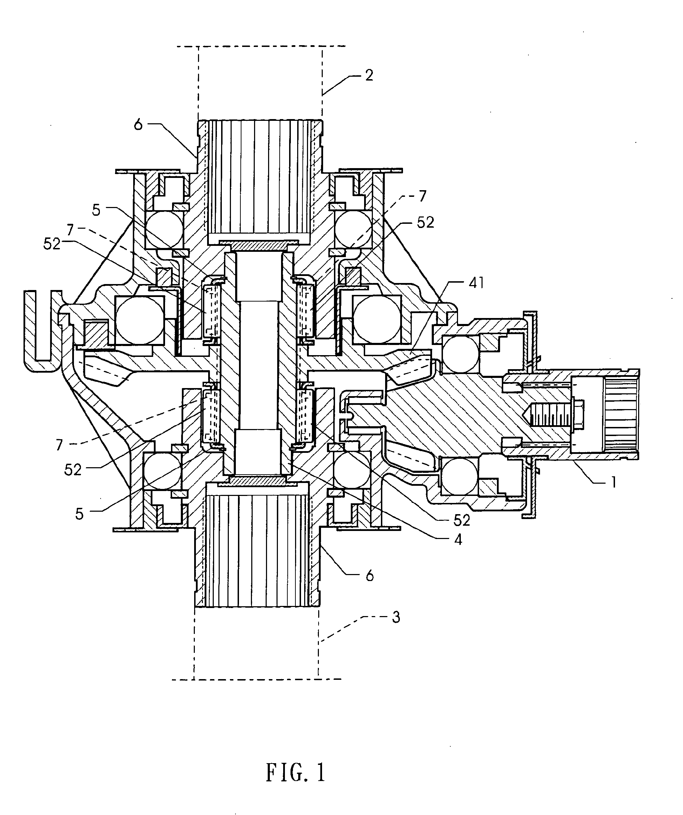

Referring to Fig. 1, the simple structural speed differential mechanism of the present invention is illustrated.

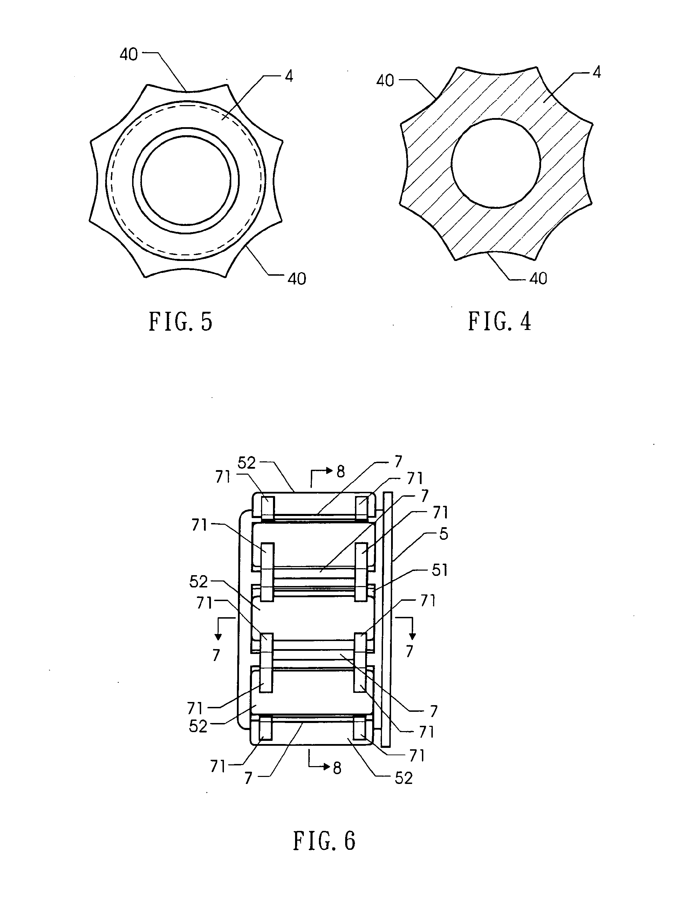

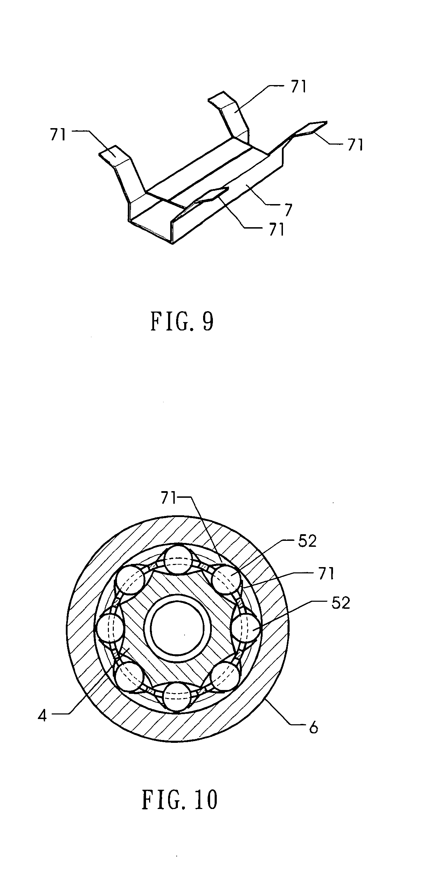

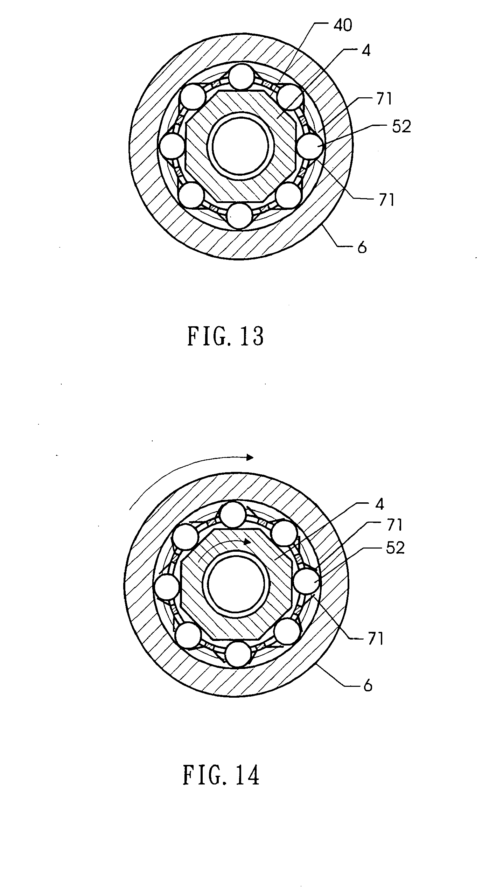

The simple structural speed differential mechanism of the present invention is installed between a driving shaft 1 and two driven shafts 2, 3. The simple structural speed differential mechanism includes a transfer shaft 4 with a polygonal outer shape. Each of the side surfaces 40 of the transfer shaft 4 has a curved surface (referring to Figs. 5 and 10) or a plane (referring to Fig. 13). When the side surface 40 is a curved surface, the side surface 40 is formed as a connection of two side curved surfaces. A middle section of the transfer shaft 4 is a gear 41 which is engaged to the driving shaft 1.

Two roller frames 5 are installed at two ends of the transfer shaft 4. Each roller frame 5 is installed with a plurality of penetrating openings 51. The number of the penetrating openings 51 is equal to that of the side surfaces 40 of the transfer shaft 4. Each penetrating opening 51 receives with a rolling post 52.

An outer side of each roller frame 5 is installed with a shaft connecting device 6. One end of each shaft connecting unit 6 is installed to an outer side of the roller frame 5. A contact area of the shaft connecting unit 6 with the rolling post 52 of the roller frame 5 has a round cross section. Another end of the shaft connecting unit 6 serves for assembling the driven shafts 2, 3.

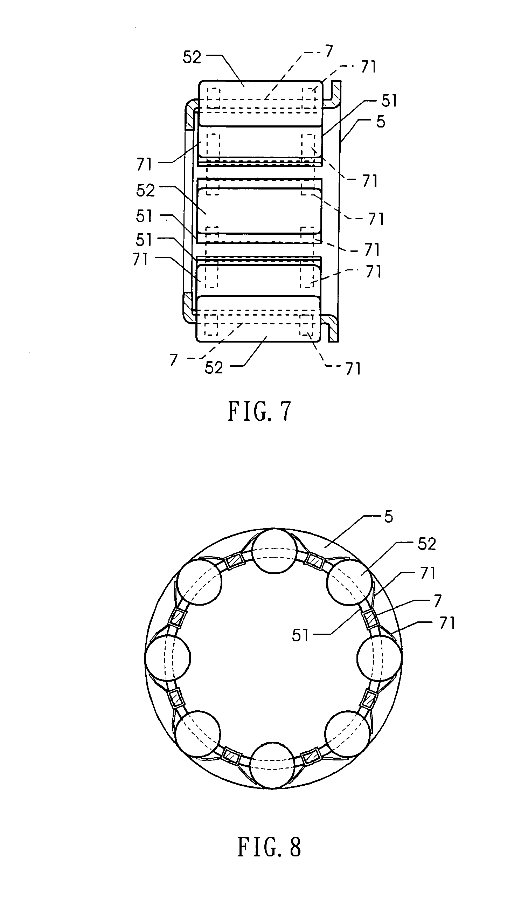

Each rolling post 52 is installed with a returning unit 7 for returning the returning unit 7 as the rolling post 52 moves. Referring to Figs. 8 and 9, one structure of the returning unit 7 is illustrated, however it is not used to confine the scope of the present invention. The returning unit 7 is an elastic element. A middle section of the returning unit 7 serves to enclose a corresponding part of the roller frame 5 between two penetrating openings 51 which may be fixed by welding. Each of two ends of two sides of each returning unit 7 is extended with an elastic press sheet 71 which can press the rolling post 52 so as to position the rolling post 52 to the transfer shaft 4 and thus the shaft connecting unit 6 is not interacted with the central part in the transfer shaft 4 and the rolling post 52 can return as it moves (referring to Figs. 10 and 13).

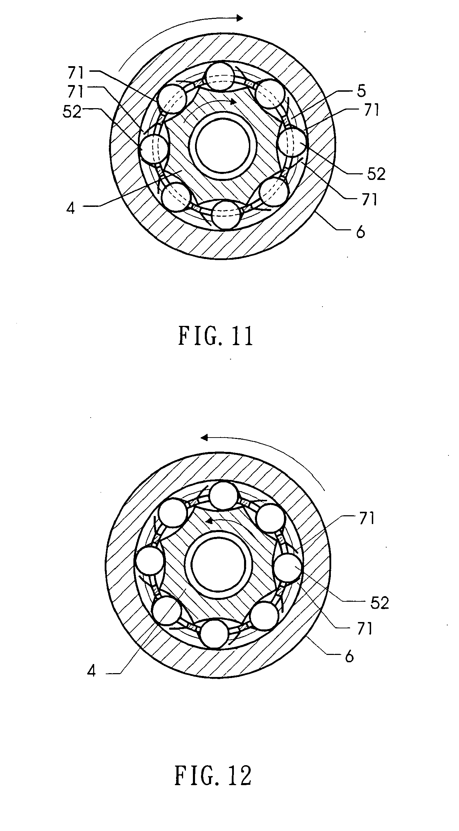

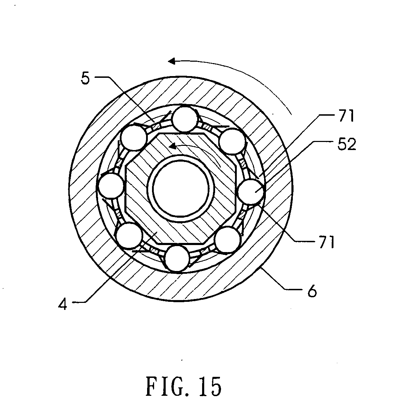

Referring to Figs. 11, 12, 13 to 15, the operation of the present invention is illustrated. When the driving shaft 1 drives the two driven shafts 2, 3 move forwards or backwards linearly, the rolling posts 52 will move independently without rotating with the two shaft connecting units 6 synchronously so that each rolling post 52 is in the ON state so as to move forwards or backwards linearly.

When in turning, as the rotation speed of the shaft connecting unit 6 is quicker than the rotation speed of the transfer shaft 4, the rolling posts 52 will leave from the ON speed due to the speed difference between the shaft connecting unit 6 and the rolling post 52. The rolling post 52 is on the off state. Then the shaft connecting unit 6 will have the effect of speed reduction in turning.

The present invention is thus described, it will be obvious that the same may be varied in many ways. Such variations are not to be regarded as a departure from the spirit and scope of the present invention, and all such modifications as would be obvious to one skilled in the art are intended to be included within the scope of the following claims.

## Claims

1. A simple structural speed differential mechanism installed between a driving shaft and two driven shafts comprising
a transfer shaft with a polygonal outer shape; a middle section of the transfer shaft being a gear which is engaged to the driving shaft;
two roller frames installed at two ends of the transfer shaft; each roller frame being installed with a plurality of penetrating openings; the number of the penetrating openings being equal to that of the side surfaces of the transfer shaft; each penetrating opening receiving a rolling post; and
two shaft connecting units; an outer side of each roller frame being installed with a shaft connecting device; one end of each shaft connecting unit being installed to an outer side of the roller frame; another end of the shaft connecting unit serving for assembling the driven shafts.
wherein when the driving shaft drives the two driven shafts to move, the rolling posts will move independently without rotating with the two shaft connecting units synchronously so that each rolling post is in an ON state and thus it moves; as in turning state, when the rotation speed of the shaft connecting unit is quicker than the rotation speed of the transfer shaft, the rolling posts will leave from the ON speed due to the speed difference between the shaft connecting unit and the rolling post; the rolling post is on an off state; and then the shaft connecting unit will have the effect of speed reduction in turning.

2. The simple structural speed differential mechanism as claimed in claim 1, wherein each rolling post is installed with a returning unit for returning the returning unit as the rolling post moves.

3. The simple structural speed differential mechanism as claimed in claim 2, wherein the returning unit is an elastic element; a middle section of the returning unit serves to enclose a corresponding part of the roller frame between two penetrating openings; each of two ends of two sides of each returning unit is extended with an elastic press sheet which can press the rolling post so as to position the rolling post to the transfer shaft and thus the shaft connecting unit is not interacted with the central part in the transfer shaft and the rolling post can return as it moves.

4. The simple structural speed differential mechanism as claimed in claim 1, wherein each side surface of the transfer shaft has a curved surface or a plane.

5. The simple structural speed differential mechanism as claimed in claim 1, wherein when the side surface is a curved surface, the side surface is formed as a connection of two side curved surfaces.

6. The simple structural speed differential mechanism as claimed in claim 1, wherein when the side surface is a curved surface, the side surface is formed as a connection of two side curved surfaces.

7. The simple structural speed differential mechanism as claimed in claim 1, wherein a contact area of the shaft connecting unit with the rolling post of the roller frame has a round cross section.
